# EUROPÄISCHE PATENTSCHRIFT

(11) **EP 2 049 355 B1**
(45) Veröffentlichungstag und Bekanntmachung des Hinweises auf die Patenterteilung: **04.05.2011**
(21) Anmeldenummer: 07730044.0
(22) Anmeldetag: 11.06.2007
(51) Int. Cl.: B60K 25/00, B60W 20/00, B60K 6/26, B60K 6/387, B60K 6/48, B60T 17/02, B60W 10/02, B60W 10/30

(54) **VAKUUMERZEUGUNG IN HYBRIDGETRIEBENEN FAHRZEUGEN**
VACUUM GENERATION IN HYBRID-DRIVE VEHICLES
CRÉATION DE VIDE DANS DES VÉHICULES À PROPULSION HYBRIDE

(30) Priorität: 04.08.2006 DE 102006036445
(43) Veröffentlichungstag der Anmeldung: 22.04.2009
(73) Patentinhaber: Robert Bosch GmbH, 70442 Stuttgart (DE)
(72) Erfinder: KRAFT, Dieter, 70839 Gerlingen (DE); BILDSTEIN, Michael, 70469 Stuttgart (DE)
(86) Internationale Anmeldenummer: PCT/EP2007/055698
(87) Internationale Veröffentlichungsnummer: WO 2008/015048

(56) Entgegenhaltungen:
- EP-A- 1 314 884
- DE-A1- 10 036 504
- DE-A1- 19 929 880
- FR-A- 2 877 629
- GB-A- 2 383 313
- JP-A- 2005 330 844

## Beschreibung

### Stand der Technik

Aus EP 1 173 674 B1 geht ein Antriebsstrang für ein Kraftfahrzeug hervor. Der Antriebsstrang umfasst einen Verbrennungsmotor, dem eine elektrische Maschine zugeordnet ist, die beim Starten des Verbrennungsmotors ein Drehmoment erzeugt. Zwischen dem Verbrennungsmotor und einem Getriebe ist eine Kupplung vorgesehen, über die ein durch den Verbrennungsmotor erzeugtes Drehmoment auf zumindest ein Fahrzeugantriebsrad übertragen wird. Es sind Einrichtungen vorgesehen, die die Kupplung beim Start des Verbrennungsmotors derart betätigen, dass ein erster Teil des beim Starten des Verbrennungsmotors von der elektrischen Maschine erzeugten Drehmoments auf das zumindest eine Fahrzeugantriebsrad und ein zum Starten des Verbrennungsmotors ausreichender zweiter Teil des von der elektrischen Maschine erzeugten Drehmomentes auf den Verbrennungsmotor übertragen wird. Die Kupplung wird mittels einer Steuereinrichtung unter Berücksichtigung temperatur- und/oder drehzahlabhängiger Kennfelder für das Antriebsmoment des Verbrennungsmotors und/oder für das Startmoment und/oder für das vorwiegend vom Kupplungseinrückweg abhängige Kupplungsmoment betrieben.

Bei weiter eingesetzten Fahrzeugantrieben, wie zum Beispiel Hybridantrieben mit mindestens einer Verbrennungskraftmaschine und mit mindestens einem weiteren Elektroantrieb, kann das Kraftfahrzeug je nach Ausführung des Antriebsstranges nur mit Hilfe des mindestens einen Elektroantriebs bewegt werden. In diesem Falle liefert der mindestens eine Elektroantrieb die gesamte Antriebsenergie, wohingegen die Verbrennungskraftmaschine abgeschaltet bleibt. Im Betriebsmodus "elektrisches Fahren" kann die stillstehende Verbrennungskraftmaschine durch den mindestens einen Elektroantrieb gestartet werden. Dies kann zum Beispiel mit Hilfe des Impulsstarts erfolgen, wobei der Drehimpuls des in Rotation befindlichen mindestens einen Elektroantriebes genutzt wird, um die stillstehende Verbrennungskraftmaschine in Rotation zu versetzen. Zur Durchführung des Impulsstarts wird zuerst die Drehzahl des mindestens einen Elektroantriebs erhöht. Um dabei keine Drehzahlerhöhung des mindestens einen Elektroantriebes herbeizuführen, wird in der Regel eine zwischen dem mindestens einen Elektroantrieb und einem Fahrzeuggetriebe angeordnete Kupplung momentengeregelt betrieben und überträgt in dieser Betriebsphase des mit einem Hybridantrieb ausgestatteten Kraftfahrzeugs das Fahrerwunschmoment. Nach erfolgter Drehzahlerhöhung des mindestens einen Elektroantriebes wird eine sich zwischen dem mindestens einen Elektroantrieb und der Verbrennungskraftmaschine befindende Kupplung geschlossen. Nachteilig bei diesem Vorgehen ist der Umstand, dass die im Schlupfzustand betriebene Kupplung zwischen dem Fahrzeuggetriebe und dem mindestens einen Elektroantrieb nicht dauerhaft in diesem Schlupfzustand betrieben werden kann, der einerseits zur Beibehaltung einer kontinuierlichen Abtriebszahl erforderlich ist, jedoch andererseits zu einer mechanischen oder thermischen Überlastung dieser Kupplung führen würde. Dies schließt einen dauerhaften Betrieb dieser Kupplung zwischen dem mindestens einen Elektroantrieb und des Getriebes des mit einem Hybridantrieb ausgestatteten Fahrzeugs aus. Zur Durchführung des geschilderten Impulsstarts ist es zunächst erforderlich, eine Drehzahlerhöhung an dem mindestens einen Elektroantrieb des Hybridantriebes herbeizuführen, so dass der gesamte Startvorgang verlängert wird, da der mindestens eine elektrische Antrieb zunächst beschleunigt werden muss. Erst danach kann eine Antriebsverbindung zur Verbrennungskraftmaschine geschaffen werden und gleichzeitig eine aufwändige Momentenregelung der Kupplung des mindestens einen Elektroantriebs zum Fahrzeuggetriebe stattfinden, um keine Momentensprünge am Abtrieb zu erzeugen.

Bei bestimmten Typen von Fahrzeugmotorisierungen, wie zum Beispiel Fahrzeugen mit selbstzündenden Verbrennungskraftmaschinen, wird während des Betriebs kein großer Unterdruck im Saugrohr aufgebaut. Dies gilt für die bereits erwähnten selbstzündenden Verbrennungskraftmaschinen aber auch für solche Verbrennungskraftmaschinen, die mit einer Benzindirekteinspritzung ausgerüstet sind. Bei diesen Fahrzeugtypen kann eine ausreichende Versorgung einer mittels Unterdruck betriebenen Bremskraftverstärkung durch eine an die Verbrennungskraftmaschine zusätzlich angeflanschte Vakuumpumpe erfolgen. Diese direkt mit der Verbrennungskraftmaschine gekuppelte Vakuumpumpe wird ständig mit einer von der Motordrehzahl abhängigen Drehzahl angetrieben, was jedoch in aller Regel einen nicht-bedarfsgerechten Antrieb darstellt.

Die Merkmale des Oberbegriffes des Anspruches 1 sind aus DE 10036504 A1 bekannt.

### Offenbarung der Erfindung

Der erfindungsgemäß vorgeschlagenen Lösung liegt die Aufgabe zugrunde beim rein elektrischen Fahrbetrieb eines mit einem Hybridantrieb ausgestatteten Fahrzeugs eine unterdruckbetätigte Bremsanlage zuverlässig zu betreiben.

Der erfindungsgemäß vorgeschlagenen Lösung folgend, wird eine einen Unterdruck bereitstellende Vakuumpumpe bedarfsgerecht geregelt und stellt sicher, dass im Falle von langen Fahrtabschnitten ohne Bremsung keine unnötigen energetischen Verluste auftreten, trotzdem jedoch eine Unterdruckversorgung auch im rein elektrischen Fahrbetrieb eines Fahrzeugs mit Hybridantrieb gewährleistet ist.

Erfindungsgemäß wird vorgeschlagen, eine Vakuumpumpe einzusetzen, die aufgrund ihrer konstruktiven Eigenschaften einen variablen Volumenstrom zulässt. Dies ist zum Beispiel bei einer Vakuumpumpe der Fall, die als verstellbare Axialkolbenpumpe ausgelegt ist. Eine derartige Vakuumpumpe wird durch den Differenzdruck zwischen einem Vakuumspeicher, so zum Beispiel einen unterdruckgesteuerten Bremskraftverstärker einer Fahrzeugbremsanlage und dem in der Umgebung herrschenden Druck gesteuert. Ist der Differenzdruck zwischen Umgebungsdruck und dem im Vakuumspeicher herrschenden Unterdruck hinreichend groß, so dass die gewünschte Bremskraftverstärkung gewährleistet werden kann, wird die Förderung der Vakuumpumpe eingestellt. Im Falle eines Hybridantriebstranges mit einer Kupplung kann die Vakuumpumpe direkt an der Verbrennungskraftmaschine angeflanscht werden. Handelt es sich bei dem Hybridantrieb zum Beispiel um einen Parallelhybrid mit zwei Kupplungen, einer A-Kupplung und einer B-Kupplung, kann der Betrieb der Vakuumpumpe jedoch nicht mehr von der Verbrennungskraftmaschine aus erfolgen. Der erfmdungsgemäß vorgeschlagenen Lösung folgend erfolgt der Antrieb der Vakuumpumpe durch die mindestens eine elektrische Maschine des Hybridantriebes, die bei rein elektrischem Fahrbetrieb im Gegensatz zur Verbrennungskraftmaschine noch mechanische Leistung an Nebenaggregate abgeben kann, was im rein elektrischen Fahrbetrieb durch die Verbrennungskraftmaschine nicht mehr geleistet werden kann, da diese entsprechend der Betriebsstrategie eines Hybridantriebes abgeschaltet ist.

Durch die erfindungsgemäß vorgeschlagene Lösung kann daher einer Unterdruckversorgung für die Bremskraftverstärkung sichergestellt werden, die bei einem Hybridantrieb, bei dem rein elektrisches Fahren möglich ist, durch die Verbrennungskraftmaschine nicht mehr zu gewährleisten ist, da diese abgeschaltet ist. Gleichzeitig ist durch die Ansteuerungsstrategie der Vakuumpumpe sichergestellt, dass kein permanent mechanische Energie verbrauchender Betrieb der Vakuumpumpe auftritt, wenn dies nicht erforderlich ist. Dies gilt auch für hinsichtlich der Bremskraftverstärkung im rein elektrischen Fahrbetrieb ungünstige Betriebsphasen, so zum Beispiel bei längerem Fahren mit sehr langsamer Geschwindigkeit. In diesem Falle ist eine Grundversorgung der Bremskraftverstärkungsanlage mit Unterdruck sichergestellt. Im Bedarfsfall kann die Unterdruckversorgung für Bremskraftverstärkung durch eine zusätzlich eingesetzte, elektrisch betriebene Vakuumpumpe erfolgen, die auf einen kleineren Volumenstrom und auf eine geringere Lebensdauer ausgelegt sein kann, als eine einzelne Vakuumpumpe.

### Zeichnung

Anhand der Zeichnung wird die Erfindung nachstehend eingehender beschrieben.

Es zeigt
- Figur 1: einen Hybridantriebsstrang mit einer A-Kupplung zwischen der Verbrennungs- kraftmaschine und dem mindestens einen elektrischen Antrieb und einer B- Kupplung zwischen dem mindestens einen elektrischen Antrieb und dem Fahr- zeuggetriebe,
- Figur 2: ein schematisches Beispiel für eine Einbauposition der Vakuumpumpe und
- Figur 3: ein Schaltschema für die Unterdruckversorgung einer Bremskraftverstärkungs- anlage über eine von der mindestens einer elektrischen Maschine angetriebene Vakuumpumpe.

### Ausführungsvarianten

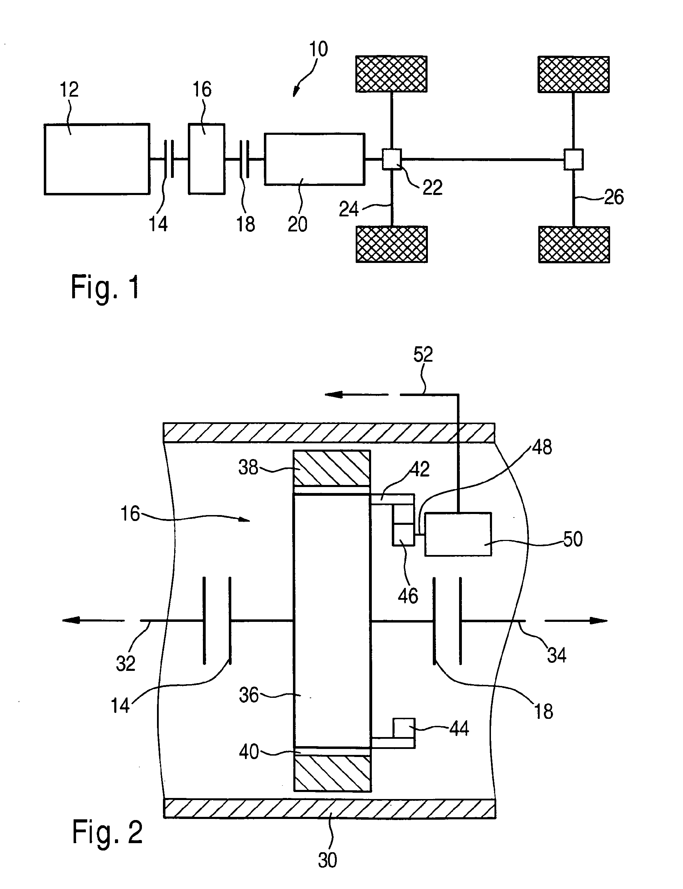

Der Darstellung gemäß Figur 1 ist ein Hybridantrieb zu entnehmen, der eine A-Kupplung zwischen einer Verbrennungskraftmaschine und mindestens einem elektrischen Antrieb und eine B-Kupplung zwischen dem mindestens einen elektrischen Antrieb und dem Fahrzeuggetriebe aufweist.

Die nachfolgenden Ausführungen beziehen sich auf einen als Beispiel herangezogenen P2-Hybridantriebsstrang, welcher durch eine A-Kupplung 14 zwischen einer Verbrennungskraftmaschine 12 und mindestens einem elektrischen Antrieb 16 und einer weiteren B-Kupplung 18 zwischen dem mindestens einen elektrischen Antrieb 16 und dem Fahrzeuggetriebe 20 gekennzeichnet ist. Die spezielle Ausgestaltung des Hybridantriebs als Parallelhybrid (P2) oder als leistungsverzweigender Hybridantrieb ist im vorliegenden Zusammenhang von untergeordneter Bedeutung. Die Konfiguration eines Hybridantriebs gemäß Figur 1 wird auch als P2-Hybrid bezeichnet und ist in Figur 1 durch Bezugszeichen 10 angedeutet. Dem Fahrzeuggetriebe 20 ist ein Achsgetriebe 22 nachgeschaltet, auf welches die Abtriebswelle des Fahrzeuggetriebes 20 wirkt. Über das Achsgetriebe 22 können Antriebsräder einzelner, mehrerer oder aller Achsen, so zum Beispiel einer Vorderachse 24 angetrieben werden. Vom Achsgetriebe 22 der Vorderachse 24 aus verläuft eine weitere Abtriebswelle zu einer Hinterachse 26, deren Räder ebenfalls angetrieben sein können, was für die vorliegende Erfindung jedoch nicht weiter bedeutsam ist.

Der Darstellung gemäß Figur 2 ist ein schematisches Beispiel eines Einbaus einer Vakuumpumpe in ein Fahrzeuggetriebe zu entnehmen.

Aus der Darstellung gemäß Figur 2 geht hervor, dass die A-Kupplung 14 und die B-Kupplung 18 in einem Getriebegehäuse 30 untergebracht werden können. Die Kupplungen 14, 18 können jedoch ebenso wie eine erfindungsgemäß eingesetzte Vakuumpumpe 50 auch außerhalb des Getriebegehäuses 30 angeordnet sein. Von der A-Kupplung 14 erstreckt sich eine Welle zur in Figur 2 nicht dargestellten Verbrennungskraftmaschine 12, von der B-Kupplung 18 erstreckt sich ein Getriebeabtrieb 34 zum Fahrzeuggetriebe 20 des Hybridantriebs 10. Das Getriebegehäuse 30 umschließt den mindestens einen elektrischen Antrieb 16, der einen Rotor 36 aufweist, der von einem Stator 38 umschlossen ist. Zwischen dem Außenumfang des Rotors 36 und dem Innenumfang des vom Getriebegehäuse 30 umschlossenen Stators 38 ist ein Luftspalt 40 ausgebildet. In der in Figur 2 dargestellten Ausfiihrungsvariante befindet sich ein Hohlrad 42 am Rotor 36, der koaxial zur A-Kupplung 14 und koaxial zur B-Kupplung 18 im Getriebegehäuse 30 aufgenommen ist. In einer Ausführungsvariante kann am Hohlrad 42 ein Zahnkranz 44 ausgebildet sein, der mit einem Ritzel 46 kämmt. Das Ritzel 46 ist in der Darstellung gemäß Figur 2 auf einer Pumpenwelle 48 aufgenommen, welche eine Vakuumpumpe 50 antreibt. Die Vakuumpumpe 50 ihrerseits steht über eine Vakuumleitung 52 mit einer Bremsanlage in Verbindung, insbesondere mit einem unterdruckgesteuerten Bremskraftverstärker.

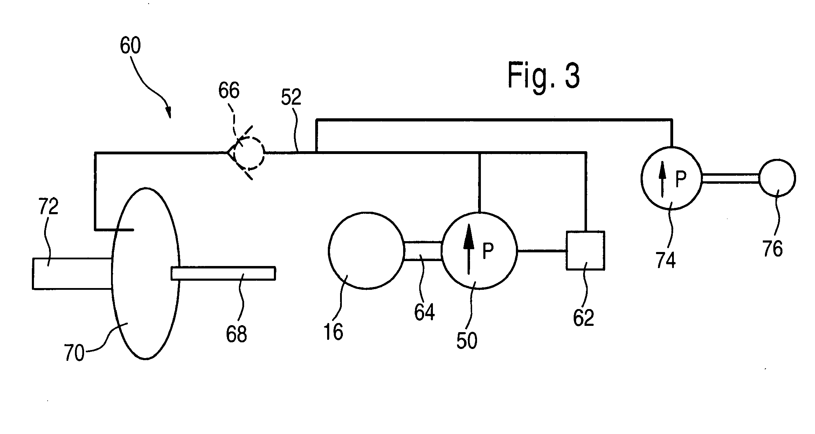

Bei der in Figur 2 nur schematisch angedeuteten Vakuumpumpe handelt es sich um eine solche, die aufgrund ihrer konstruktiven Eigenschaften einen variablen Volumenstrom zulässt, so zum Beispiel um eine verstellbare Axialkolbenpumpe. Der variable Volumenstrom der Vakuumpumpe 40 wird durch einen Differenzdruck zwischen einem Vakuumbooster und dem Umgebungsdruck gesteuert. In der Darstellung gemäß Figur 3 befindet sich der mindestens eine elektrische Antrieb 16 in einem P2-Hybridantriebsstrang 10, dem die mindestens eine elektrische Maschine 16 durch entsprechendes Öffnen der A-Kupplung (14) und der B-Kupplung 18 frei drehen kann. Gemäß der in Figur 2 dargestellten Ausführungsvariante kann die Vakuumpumpe 50 entweder an die mindestens eine elektrische Maschine 16 angeflanscht sein oder bei entsprechendem zur Verfügung stehenden Bauraum und Auslegung des mindestens einen elektrischen Antriebes 16 in diese integriert sein, so dass eine mechanische Verbindung zwischen der Pumpenwelle 48 zum Rotor 36 des mindestens einen elektrischen Antriebes 16 vorliegt. In der Darstellung gemäß Figur 2 erfolgt die mechanische Anbindung zwischen dem Rotor 36 des mindestens einen elektrischen Antriebes 16 über ein am Rotor 36 aufgenommenes Hohlrad 42. Am Innenumfang des Hohlrades 42 befindet sich ein Zahnkranz 44, der eine Innenverzahnung aufweist, die mit einem auf der Pumpenwelle 48 aufgenommenen Ritzel 46 kämmt. Anstelle der in Figur 2 schematisch dargestellten mechanischen Verbindung zwischen der Vakuumpumpe 50 und dem mindestens einen elektrischen Antrieb 16, kann anstelle des in der Ausführungsvariante gemäß Figur 2 eingesetzten Hohlrades 42 auch ein Stirnrad oder ein Winkeltrieb eingesetzt werden.

Von der als verstellbare Axial- oder Radialkolbenpumpe, als Flügelzellenpumpe mit verstellbarer Exzentrizität zwischen Pumpenwelle 48 und Gehäuse oder als verstellbare Axialkolbenpumpe ausbildbaren Vakuumpumpe 50 verläuft eine mit Bezugszeichen 52 identifizierte Vakuumleitung 52 zur Bremsanlage.

Die Vakuumleitung 52 verläuft zwischen einem in Figur 3 dargestellten Vakuumspeicher und der Saugseite der Vakuumpumpe 50. An einer dafür geeigneten Stelle kann die Pumpenabluft direkt oder über das Motorgehäuse der Verbrennungskraftmaschine 12 in die Atmosphäre abgegeben werden. Die in Abhängigkeit von dem mindestens einen elektrischen Antrieb 16 rotierende Vakuumpumpe 50 fördert nun nur bei abfallendem Vakuum in dem Vakuumspeicher (vgl. Darstellung gemäß Figur 3) die Luft aus diesem in die Umgebung. Dazu kann eine Steuerung der Vakuumpumpe 50 zum Beispiel über eine Unterdruckdose erfolgen, welche durch den in der Vakuumleitung 52 anliegenden Unterdruck pneumatisch angesteuert wird. Alternativ ist eine elektronische Steuerung mittels eines Aktuators denkbar, welcher die Fördermenge, d.h. den Volumenstrom der Vakuumpumpe 50 reguliert.

Die Verstellung der Förderleistung, d.h. die Veränderung des Volumenstroms, der durch die Vakuumpumpe. 50 gefördert wird, erfolgt bei Verwendung einer verstellbaren Axialkolbenpumpe, um ein Beispiel zu nennen, durch die Verstellung des maximalen Kolbenhubes während einer Umdrchung.

Anstelle der in Figur 2 dargestellten mechanischen Verbindung zwischen der Vakuumpumpe 50 und dem Rotor 36 des mindestens einen elektrischen Antriebes 16 über das Hohlrad 42, den am Hohlrad 42 befestigten Zahnkranz 44 und das auf der Pumpenwelle 48 ausgebildete Ritzel 46, kann der Antrieb der Vakuumpumpe 50 auch über einen Winkeltrieb oder über einen Stirnradantrieb oder dergleichen erfolgen, abhängig von den jeweils zur Verfügung stehenden Bauräumen. Auch jede andere antriebstechnische Verbindung so zum Beispiel ein Riementrieb oder ein Zahnriementrieb kann eingesetzt werden.

Der Darstellung gemäß Figur 3 ist die Pneumatikschaltung der erfindungsgemäß vorgeschlagenen Vorrichtung zur Erzeugung eines Unterdrucks zu entnehmen.

Aus der Darstellung gemäß Figur 3 geht hervor, dass der mindestens eine elektrische Antrieb 16 über eine starre Welle 64 mit der Vakuumpumpe 50 gekoppelt ist. Die Vakuumpumpe 50 wird ihrerseits mittels eines unterdruckbetätigten Aktuators 62, der zum Beispiel als Unterdruckdose ausgeführt sein kann, angesteuert. Die Vakuumpumpe 50 fördert in die Vakuumleitung 52, die im einfachsten Falle als Schlauchleitung ausgebildet sein kann. Die Vakuumleitung 52 erstreckt sich von der Vakuumpumpe 50 zu einem Vakuumspeicher 70.

Der Vakuumspeicher 70 beaufschlagt einen Hauptbremszylinder 72 und steht seinerseits in Verbindung mit einer vom über das Bremspedal aus betätigbaren Pedalstange 68. In die Vakuumleitung 52, die sich zwischen dem Vakuumspeicher 70 und dem unterdruckbetätigten Aktuator 62 erstreckt, kann optional ein Rückschlagventil 66 integriert sein. Durch dieses optionale Rückschlagventil 66, welches vor dem Vakuumspeicher 70 angeordnet ist, wird ein zu schneller Druckanstieg im Vakuumspeicher 70 im Falle eines Lecks in der Vakuumleitung 52 verhindert. Das Rückschlagventil 66 ändert die Funktion der Volumenstromsteuerung nicht. Der Vakuumspeicher 70 kann mit einer kontinuierlichen Überwachungseinrichtung versehen werden, welche den im Vakuumspeicher 70 herrschenden Unterdruck überwacht und somit bei einem schleichenden Druckanstieg eine Fehlermeldung generiert.

Die Vakuumleitung 52 zwischen dem druckgesteuerten Aktuator 62 und dem Vakuumspeicher 70 kann im einfachsten Falle als eine Schlauchverbindung zwischen der Vakuumpumpe 50 und dem Vakuumspeicher 70 ausgebildet sein. Sind in einer als Schlauchverbindung ausgebildeten Vakuumleitung 52 sind Ventile integriert, eignet sich diese sowohl als Förderleitung von der Vakuumpumpe 50 zum Vakuumspeicher 70, als auch als Steuerleitung zur Übermittlung des im Vakuumspeicher 70 herrschenden Unterdruckes an den druckgesteuerten Aktuator 62. Für den Fall, dass ein Rückschlagventil 66 in der Vakuumleitung 52 aufgenommen ist, kann die pneumatische Steuerung des Aktuators 62 über eine unabhängige Steuerleitung erfolgen. Alternativ kann ein Rückschlagventil 66, an dem eine definierte Rückflussrate in Sperrrichtung verwirklicht werden kann, eingesetzt werden, welches eine Steuerung zulässt, aber im Betätigungsfall nur einen hinreichend langsamen Rückfluss in einen Vakuumspeicher 70 zulässt.

Die in den Figuren 2 und 3 dargestellte Vakuumpumpe ist insbesondere als eine Vakuumpumpe ausgebildet, deren Förderleistung variabel ist. Dazu kann diese als verstellbare Axialkolbenpumpe, um ein Beispiel zu nennen, gestaltet sein, welche durch einen Differenzdruck zwischen dem Vakuumspeicher 70 und der Umgebung gesteuert wird. Ist der Differenzdruck zwischen der Umgebung und dem Inneren des Vakuumspeichers 70 hinreichend groß, um die gewünschte Bremskraftverstärkung innerhalb einer Bremsanlage eines Kraftfahrzeugs zu gewährleisten, wird die Förderung der Vakuumpumpe 50 eingestellt. Dies erfolgt bei Erfassung eines Endvakuums dadurch, dass ein Förderhub zum Beispiel bei einer verstellbaren Axialkolbenpumpe durch die Verstellung des maximalen Kolbenhubwegs auf Null gestellt wird, so dass die Vakuumpumpe 50 keine Förderleistung mehr erbringt und lediglich Reibungsverluste in der Vakuumpumpe 50 zu überwinden sind. Für den Fall anhaltender Fahrt des Fahrzeugs im rein elektrischen Fahrbetrieb mit geringer Geschwindigkeit kann gegebenenfalls eine unabhängige weitere Vakuumpumpe 74 vorgesehen sein, da eine zu geringe Pumpendrehzahl der mit dem Rotor 36 des mindestens einen E-Antriebes 16 gekoppelten Vakuumpumpe 50 den maximal möglichen Volumenstrom der Vakuumpumpe 50 auf einen zu geringen Wert begrenzt. Die zusätzlich, optional einsetzbare Vakuumpumpe 74 ist bevorzugt Vakuumpumpe, die über einen elektrischen Antrieb 76 angetrieben ist und die auf einen kleineren Volumenstrom und auf eine geringere Lebensdauer ausgelegt sein kann, im Gegensatz zu einer einzelnen Pumpe.

Das im Vakuumspeicher 70 herrschende Unterdruckniveau kann zum Beispiel durch eine sensorische Überwachung überwacht werden. Diese sensorische Überwachung kann zum Beispiel zu einer Ansteuerung des mindestens einen E-Antriebes 16 via Fahrfunktionen in speziellen Fahrsituationen des dem Hybridantrieb 10 ausgestatteten Fahrzeugs genutzt werden. So kann während des Fahrzeugstillstandes durch die geöffnete A-Kupplung 14 ein abgekoppelter Betrieb des mindestens einen E-Antriebs 16 erfolgen, wodurch die mit diesem mechanisch verbundene Vakuumpumpe 50 angetrieben wird und die Unterdruckversorgung der Bremsanlage sicherstellt. Außer in der Fahrsituation "Fahrzeugstillstand" kann in der Fahrsituation "rein elektrisches Fahren" die Unterdruckversorgung der Bremsanlage über die Vakuumpumpe 50 sichergestellt werden, die mechanisch mit dem Rotor 36 des mindestens einen E-Antriebs 16 gekoppelt ist. Im rein elektrischen Fahrbetrieb ist der mindestens eine E-Antrieb 16 in der Lage, im Gegensatz zu über die geöffnete A-Kupplung 14 abgekuppelten Verbrennungskraftmaschine 12 mechanische Leistung an Nebenaggregate, wozu die Vakuumpumpe 50 zählt, abzugeben. Durch die über den Unterdruck gesteuerten Aktuator 62 erfolgende Ansteuerung der Vakuumpumpe 50 ist sichergestellt, dass kein permanent mechanische Energie verbrauchender Betrieb der Vakuumpumpe 50 entsteht, wenn im Vakuumspeicher 70 ein hinreichender Unterdruck vorliegt. Die in Abhängigkeit von der Drehzahl des E-Antriebes 16 rotierende Vakuumpumpe 50 fördert nun bei im Vakuumspeicher 70 abfallenden Vakuum, Luft aus diesem in die Umgebung. Bevorzugt ist der druckgesteuerte Aktuator 62 als Unterdruckdose ausgebildet, welche durch den in der Vakuumleitung 52 anliegenden Unterdruck pneumatisch angesteuert wird. Ist ein Endvakuum im Vakuumspeicher 70 erreicht, wird zum Beispiel der Kolbenhub einer verstellbaren Axialkolbenpumpe auf Null gesetzt, so dass die Vakuumpumpe 50 keine Förderleistung mehr erbringt und lediglich Reibungsverluste in der Vakuumpumpe 50 zu überwinden sind. Für den Fall, dass eine Fahrsituation "anhaltende Fahrt mit geringer Geschwindigkeit" im Betriebsmodus "rein elektrisches Fahren" des Fahrzeugs mit Hybridantriebs 10 über längere Zeit andauert, kann eine unabhängige elektrisch betriebene Vakuumpumpe eingesetzt werden, die eine Unterdruck-Grundversorgung effizient sicherstellt. Die zusätzliche, optional einsetzbare weitere Vakuumpumpe 74 ist auf einen kleineren Volumenstrom und auf eine geringere Lebensdauer ausgelegt, da sie nur in bestimmten Fahrsituationen des mit dem Hybridantrieb 10 ausgestatteten Fahrzeugs zum Einsatz kommt.

## Patentansprüche

1. Vorrichtung zur Erzeugung eines Unterdruckes, insbesondere für eine Bremsanlage eines insbesondere mit einem Hybridantrieb (10) ausgestatteten Fahrzeugs, mit einer Verbrennungskraftmaschine (12) und mindestens einem E-Antrieb (16), der über eine Kupplung (14) von der Verbrennungskraftmaschine (12) abkuppelbar ist und der als Hyb ridantrieb (10) im Betriebsmodus "rein elektrisches Fahren" betreibbar ist, wobei eine Vakuumpumpe (50) mechanisch (42, 44, 46) mit dem mindestens einen E-Antrieb (16) verbunden ist, **dadurch gekennzeichnet, dass** die Vakuumpumpe (50) mit verstellbarer Förderleistung ausgeführt ist.

2. Vorrichtung zur Erzeugung eines Unterdruckes gemäß Anspruch 1, **dadurch gekennzeichnet, dass** der Vakuumpumpe (50) ein unterdruckgesteuerter Aktuator (62) zugeordnet ist, der die Vakuumpumpe (50) abhängig von einem in einem Vakuumspeicher (70) herrschenden Unterdruck ansteuert.

3. Vorrichtung zur Erzeugung eines Unterdruckes gemäß Anspruch 2, **dadurch gekennzeichnet, dass** zwischen dem Vakuumspeicher (70) und der Vakuumpumpe (50) eine Vakuumleitung (52) verläuft, die bevorzugt als Schlauchverbindung ausgebildet ist.

4. Vorrichtung zur Erzeugung eines Unterdruckes gemäß Anspruch 2, **dadurch gekennzeichnet, dass** der unterdruckgesteuerte Aktuator (62) als Unterdruckdose oder als elektronische Aktuierung ausgeführt ist.

5. Vorrichtung zur Erzeugung eines Unterdruckes gemäß Anspruch 1, **dadurch gekennzeichnet, dass** die mechanische Verbindung zwischen der Vakuumpumpe (50) und dem mindestens einen E-Antrieb (16) über einen Zahnkranz (44), der mit einem Ritzel (46) kämmt, oder eine Stimradverbindung, einen Winkeltrieb, einem Riemen- oder einem Kettentrieb erfolgt.

6. Vorrichtung zur Erzeugung eines Unterdruckes gemäß der Ansprüche 2 und 3, **dadurch gekennzeichnet, dass** die Vakuumleitung (52) sowohl als Förderleitung zwischen dem Unterdruckreservoir (70) und der Vakuumpumpe (50) als auch als Steuerleitung für den unterdruckbetätigten Aktuator (62) dient.

7. Vorrichtung zur Erzeugung eines Unterdruckes gemäß Anspruch 1, **dadurch gekennzeichnet, dass** der Vakuumpumpe (50) eine weitere, elektrisch betriebene Vakuumpumpe (74) zugeordnet ist, die die Unterdruckversorgung der Bremsanlage in Fahrphasen des Fahrzeugs mit geringer Geschwindigkeit sicherstellt.

8. Verfahren zur Erzeugung eines Unterdruckes für eine Bremsanlage eines insbesondere mit einem Hybridantrieb (10) ausgestatteten Fahrzeugs, mit einer Verbrennungskraftmaschine (12) und mindestens einem E-Antrieb (16), der über eine Kupplung (14) von der Verbrennungskraftmaschine (12) abkuppelbar ist und der Hybridantrieb 10 im Betriebsmodus "rein elektrisches Fahren" betreibbar ist, mit nachfolgenden Verfahrensschritten:
a) bei geöffneter Kupplung (14) zwischen der Verbrennungskraftmaschine (12) und dem mindestens einen E-Antrieb (16) im Betriebsmodus "elektrisches Fahren", wird eine Vakuumpumpe (50) mit verstellbarer Förderleistung von dem mindestens einen E-Antrieb (16) angetrieben,
b) die Vakuumpumpe (50) wird abhängig von in einem Vakuumspeicher (70) herrschenden Unterdruck durch einen Akutator (62) angesteuert, oder
c) eine zusätzliche, elektrisch betriebene Vakuumpumpe (74) stellt die Unterdruckversorgung bei niedrigen Drehzahlen des mindestens einen E-Antriebs (16) sicher.

9. Verfahren gemäß Anspruch 8, **dadurch gekennzeichnet, dass** bei Erreichen eines Endvakuums im Vakuumspeicher (70) die Förderleistung der Vakuumpumpe (50) durch den unterdruckgesteuerten Aktuator (62) zu Null gesetzt wird.

10. Verfahren gemäß Anspruch 8, **dadurch gekennzeichnet, dass** die Vakuumpumpe (50) nur bei abfallendem Vakuum im Vakuumspeicher (70) Luft aus diesem in die Umgebung fördert.

11. Verfahren gemäß Anspruch 8, **dadurch gekennzeichnet, dass** bei Fahrzeugstillstand im von der Verbrennungskraftmaschine (12) abgekoppelten Betrieb des mindestens einen E-Antriebs (16) der Antrieb der Vakuumpumpe (50) durch den mindestens einen E-Antrieb (16) erfolgt.

## Claims

1. Device for generating a vacuum, in particular for a brake system of a vehicle which is equipped in particular with a hybrid drive (10), said vehicle having an internal combustion engine (12) and having at least one electric drive (16) which can be decoupled from the internal combustion engine (12) by means of a clutch (14) and which can be operated, as a hybrid drive (10), in the operating mode "purely electric driving", a vacuum pump (50) being mechanically (42, 44, 46) connected to the at least one electric drive (16), **characterized in that** the vacuum pump (50) is designed so as to have an adjustable delivery rate.

2. Device for generating a vacuum according to Claim 1, **characterized in that** the vacuum pump (50) is assigned a vacuum-controlled actuator (62) which activates the vacuum pump (50) as a function of a vacuum prevailing in a vacuum accumulator (70).

3. Device for generating a vacuum according to Claim 2, **characterized in that** a vacuum line (52) designed preferably as a hose connection is formed between the vacuum accumulator (70) and the vacuum pump (50).

4. Device for generating a vacuum according to Claim 2, **characterized in that** the vacuum-controlled actuator (62) is designed as a vacuum cell or as an electronic actuation means.

5. Device for generating a vacuum according to Claim 1, **characterized in that** the mechanical connection between the vacuum pump (50) and the at least one electric drive (16) is realized by means of a toothed ring (44) which meshes with a pinion (46), or a spur gear connection, an angle drive, a belt drive or a chain drive.

6. Device for generating a vacuum according to Claims 2 and 3, **characterized in that** the vacuum line (52) serves both as a delivery line between the vacuum reservoir (70) and the vacuum pump (50) and also as a control line for the vacuum-actuated actuator (62).

7. Device for generating a vacuum according to Claim 1, **characterized in that** the vacuum pump (50) is assigned a further, electrically operated vacuum pump (74) which ensures the vacuum supply to the brake system in driving phases of the vehicle at low speed.

8. Method for generating a vacuum for a brake system of a vehicle equipped in particular with a hybrid drive (10), said vehicle having an internal combustion engine (12) and having at least one electric drive (16) which can be decoupled from the internal combustion engine (12) by means of a clutch (14), and the hybrid drive (10) being operable in the operating mode "purely electric driving", having the following method steps:
a) when the clutch (14) between the internal combustion engine (12) and the at least one electric drive (16) is open in the operating mode "electric driving", a vacuum pump (50) with adjustable delivery rate is driven by the at least one electric drive (16),
b) the vacuum pump (50) is activated by an actuator (62) as a function of a vacuum prevailing in a vacuum accumulator (70), or
c) an additional, electrically driven vacuum pump (74) ensures the vacuum supply at low rotational speeds of the at least one electric drive (16).

9. Method according to Claim 8, **characterized in that**, when a final vacuum in the vacuum accumulator (70) is reached, the delivery rate of the vacuum pump (50) is set to zero by the vacuum-controlled actuator (62).

10. Method according to Claim 8, **characterized in that** the vacuum pump (50) delivers air from the vacuum accumulator (70) into the environment only when the vacuum in said vacuum accumulator is falling.

11. Method according to Claim 8, **characterized in that**, when the vehicle is at a standstill during the operation of the at least one electric drive (16) decoupled from the internal combustion engine (12), the vacuum pump (50) is driven by the at least one electric drive (16).

## Revendications

1. Procédé de création d'une dépression, notamment pour une installation de freinage d'un véhicule muni notamment d'un entraînement hybride (10), comprenant un moteur à combustion interne (12) et au moins un entraînement électrique (16), qui peut être désaccouplé du moteur à combustion interne (12) par le biais d'un accouplement (14) et qui peut fonctionner en tant qu'entraînement hybride (10) en mode "conduite purement électrique", une pompe à vide (50) étant connectée mécaniquement (42, 44, 46) à l'au moins un entraînement électrique (16), **caractérisé en ce que** la pompe à vide (50) est réalisée avec une puissance de refoulement réglable.

2. Dispositif de création d'une dépression selon la revendication 1, **caractérisé en ce qu'**à la pompe à vide (50) est associé un actionneur (62) commandé par la dépression, lequel commande la pompe à vide (50) en fonction d'une dépression régnant dans un accumulateur de vide (70).

3. Dispositif de création d'une dépression selon la revendication 2, **caractérisé en ce qu'**une conduite de vide (52) s'étend entre l'accumulateur de vide (70) et la pompe à vide (50), laquelle est réalisée de préférence sous forme de connexion à flexible.

4. Dispositif de création d'une dépression selon la revendication 2, **caractérisé en ce que** l'actionneur (62) commandé par la dépression est réalisé sous forme de boîte à dépression ou sous forme d'actionnement électronique.

5. Dispositif de création d'une dépression selon la revendication 1, **caractérisé en ce que** la connexion mécanique entre la pompe à vide (50) et l'au moins un entraînement électrique (16) est réalisée par le biais d'une couronne dentée (44), qui s'engrène avec un pignon (46), ou par le biais d'une connexion à pignon droit, d'une transmission angulaire, d'une transmission à courroie ou à chaîne.

6. Dispositif de création d'une dépression selon les revendications 2 et 3, **caractérisé en ce que** la conduite de vide (52) sert à la fois de conduite de transport entre le réservoir de dépression (70) et la pompe à vide (50) et de conduite de commande pour l'actionneur (62) commandé par la dépression.

7. Dispositif de création d'une dépression selon la revendication 1, **caractérisé en ce qu'**à la pompe à vide (50) est associée une autre pompe à vide (74) à commande électrique, qui assure l'alimentation en dépression de l'installation de freinage dans des phases de conduite du véhicule à faible vitesse.

8. Procédé de création d'une dépression pour une installation de freinage d'un véhicule muni notamment d'un entraînement hybride (10), comprenant un moteur à combustion interne (12) et au moins un entraînement électrique (16) qui peut être désaccouplé du moteur à combustion interne (12) par le biais d'un accouplement (14) et qui peut fonctionner en tant qu'entraînement hybride (10) en mode "conduite purement électrique", comprenant les étapes de procédé suivantes :
a) lorsque l'accouplement (14) est ouvert entre le moteur à combustion interne (12) et l'au moins un entraînement électrique (16) en mode de fonctionnement "conduite électrique", une pompe à vide (50) avec une puissance de refoulement réglable est entraînée par l'au moins un entraînement électrique (16),
b) la pompe à vide (50) est commandée en fonction de la dépression régnant dans un accumulateur de vide (70) par un actionneur (62), ou
c) une pompe à vide supplémentaire (74), à commande électrique, assure l'alimentation en dépression à faibles régimes de l'au moins un entraînement électrique (16).

9. Procédé selon la revendication 8, **caractérisé en ce que** lorsqu'un vide final est obtenu dans l'accumulateur de vide (70), la puissance de refoulement de la pompe à vide (50) est mise à zéro par l'actionneur (62) commandé par la dépression.

10. Procédé selon la revendication 8, **caractérisé en ce que** la pompe à vide (50) ne refoule de l'air hors de l'accumulateur de vide (70) dans l'environnement que lorsque le vide dans l'accumulateur de vide diminue.

11. Procédé selon la revendication 8, **caractérisé en ce que** dans le cas d'un arrêt du véhicule pendant le fonctionnement de l'au moins un entraînement électrique (16) désaccouplé du moteur à combustion interne (12), l'entraînement de la pompe à vide (50) est effectué par l'au moins un entraînement électrique (16).
